# EUROPÄISCHE PATENTSCHRIFT

(11) **EP 2 524 855 B1**
(45) Veröffentlichungstag und Bekanntmachung des Hinweises auf die Patenterteilung: **07.03.2018**
(21) Anmeldenummer: 11166979.2
(22) Anmeldetag: 20.05.2011
(51) Int. Cl.: B62D 29/04, B62D 33/04

(54) **Aufbau für ein Nutzfahrzeug**
Structure for a commercial vehicle
Structure pour un véhicule utilitaire

(43) Veröffentlichungstag der Anmeldung: 21.11.2012
(73) Patentinhaber: Schmitz Cargobull AG, 48341 Altenberge (DE)
(72) Erfinder: Beelmann, Reinhard, 45721, Haltern am See (DE); Dorr, Christoph, 46514, Schermbeck (DE)
(74) Vertreter: Cohausz & Florack

(56) Entgegenhaltungen:
- EP-A1- 0 109 093
- WO-A1-96/29232
- US-A- 4 750 859
- US-A1- 2007 284 913
- US-A1- 2009 121 511

## Beschreibung

Die Erfindung betrifft einen Aufbau, insbesondere einen Kofferaufbau, für ein Nutzfahrzeug, das mindestens eine Seitenwandkomponente und einen Boden aufweist, der mit der Seitenwandkomponente fest verbunden ist.

Solche Kofferaufbauten werden insbesondere für Kühlfahrzeuge verwendet, mit denen verderbliche Ware transportiert wird. Die Wand-, Dach- und Bodenelemente des Kofferaufbaus sind daher üblicherweise als Sandwichkonstruktion aufgebaut, die aus zwei Außenlagen aus Stahlblech und einer zwischen die Außenlagen gefüllten Schaumfüllung bestehen. Die metallischen Außenlagen schützen dabei die Schaumfüllung gegen Beschädigungen, während die Schaumfüllung die Wärmeisolation und ausreichende Festigkeit des Sandwichverbundes gewährleistet.

Unabhängig vom jeweiligen Verwendungszweck wird von Kofferaufbauten der in Rede stehenden Art gefordert, dass sie ein geringes Gewicht besitzen und kostengünstig hergestellt werden können. Daher ist man bestrebt, die Einzelelemente eines solchen Kofferaufbaus so einfach wie möglich miteinander zu verbinden. Gleichzeitig sollen die Kofferaufbauten eine so hohe Formstabilität besitzen, dass sie auch unter ungünstigen Betriebsbedingungen die jeweils transportierte Last sicher schützen.

Um die Seitenwandkomponenten eines Aufbaus für ein Nutzfahrzeug mit dem jeweiligen Boden des Aufbaus zu verbinden, sind an dem Boden oder einem den Boden tragenden Rahmen üblicherweise Profile oder gesonderte Stützelemente vorgesehen, die die Last der Seitenwandkomponente abstützen.

Eine Möglichkeit, eine Seitenwandkomponente mit einem rechtwinklig darauf stoßenden Bodenelement eines Kofferaufbaus auf einfache Weise zu verbinden, ist in der DE 101 03 077 B4 beschrieben. Gemäß der in dieser Patentschrift beschriebenen Lösung sind die beiden aufeinander stoßenden Elemente im Bereich ihrer Wandkanten über eine außen liegende Falzverbindung miteinander verbunden. Die Falzverbindung wird dabei bevorzugt durch Umbördeln eines von dem einen Wandelement abstehenden Anschlussblechs mit einem von dem anderen Wandelement abstehenden Anschlussblech hergestellt. Dabei stößt das Bodenelement stumpf gegen das Seitenwandelement. Die Verfalzung von Boden- und Seitenwand ist dann in einem seitlichen Randbereich des Bodenelements unterhalb des an das Bodenelement angeschlossenen Seitenwandelements angeordnet. Durch eine Verkröpfung der frei über die Längswand und das Bodenelement vorsehenden Anschlussbleche ist dabei erreicht, dass die Falzstelle weder über die Unterseite des Bodenelements noch die Außenfläche der Längswand hinaus steht.

Der Vorteil der in der DE 101 03 077 B4 beschriebenen Art und Weise der Verbindung von zwei Wandelementen eines Kofferaufbaus besteht darin, dass sie mit einfachen Werkzeugen hergestellt werden kann und dass keine zusätzlichen Befestigungselemente, wie Schrauben, Nieten oder Verbindungsstützprofile, benötigt werden, um die Wandelemente dauerhaft sicher aneinander zu befestigen. Problematisch ist dabei allerdings, dass die Falzverbindung die volle Last des Seitenwandelements aufnehmen muss und besonderes Werkzeug erforderlich ist, um die Verbindung mit vertretbarem Aufwand und hoher Qualität herstellen zu können.

Letzteres erweist sich insbesondere dann als Nachteil, wenn ein Kofferaufbau nach Art des aus der EP 0 607 575 A1 bekannten Standes der Technik als Bausatz angeliefert und unter in einer kleineren Werkstatt herrschenden Bedingungen handwerklich zusammengesetzt werden soll.

Neben dem voranstehend erläuterten Stand der Technik ist aus der WO 96/29232 A1 ein Aufbau mit einer Seitenwandkomponente vorgesehen, die einen Schaumkern und den Schaumkern abdeckende Paneele aus einem formsteifen Material aufweisen. Das dem jeweiligen Boden zugeordnete Paneel ist dabei über den Schaumkern nach unten verlängert. Gleichzeitig ist an den unteren Randbereich des außenliegenden Paneels ein Schenkel eines Winkelprofils angelegt, das mit seinem rechtwinklig zum Schenkel ausgerichteten mittleren Abschnitt die Unterseite des Schaumkerns abdeckt und mit seinem dem Boden zugeordneten, rechtwinklig zum Abschnitt ausgerichteten Schenkel an der vom Boden abgewandten Außenseite des nach unten verlängerten Abschnitts des Paneels anliegt. An der vom Schenkel abgewandten Seite des nach unten verlängerten Abschnitts des Paneels liegt zudem ein nach unten verlängerter Abschnitt einer Sockelscheuerleiste an.

Aus der US 4,750,859 ist des Weiteren ein Aufbau mit Seitenwandkomponenten bekannt, die aus einer Schichtholzplatte und auf deren Außenflächen aufgebrachten Fiberglass-Paneelen gebildet sind. Mit ihrem unteren Randbereich sitzen die Seitenwandkomponenten auf Stützelementen. Die Stützelemente weisen jeweils einen unteren horizontal vorstehenden Schenkel auf, auf dessen Oberseite die jeweilige Seitenwandkomponente mit ihrem unteren Rand sitzt. Daran schließt sich ein vertikal ausgerichteter, mittlerer Abschnitt an, der auf der dem Boden zugeordneten Seite der Seitenwandkomponente anliegt. Schließlich steht ein oberer zweiter Schenkel in Richtung des Bodens von dem mittleren Abschnitt in horizontaler Richtung von dem Stützelement ab. Der mittlere Abschnitt ist dabei gleichzeitig an der Stirnseite eines Querträgers abgestützt, auf dessen oberer Seite der obere, seitlich abstehende Schenkel des Stützelements aufliegt. Mittels Nieten ist die Seitenwandkomponente mit dem Stützelement fest verbunden. Dazu sind die Nieten jeweils durch den mittleren Abschnitt des Stützelements und den unteren Randbereich der jeweiligen Seitenwandkomponente bis auf die Außenseite einer Leiste, die auf die Außenseite der Seitenwandkomponente gelegt ist, bzw. bis zu einer in die Außenseite der Seitenwandkomponente eingesenkte Vertiefung geführt.

Aus der EP 0 109 093 A1 ist schließlich ein Aufbau für ein Nutzfahrzeug bekannt, bei dem die Seitenwände und das Dach als Verbundplatten ausgebildet, welche jeweils eine äußere Deckschicht und eine innere Deckschicht umfassen. Dabei sind in die Verbundplatten rohrförmige Verstärkungsteile eingelassen, in regelmäßigen Abständen über die Länge der Platten verteilt sind. In die untere Aufnahmeöffnung der Verstärkungsteile ragt ein Schenkel eines winkelförmigen Montageteils. Die Verbindung zwischen dem Montageteil und dem Verstärkungsteil erfolgt mittels Schrauben, die vom durch den Aufbau umgrenzten Raum her durch die Wand des jeweiligen Verstärkungsteils in den in dem betreffenden Verstärkungsteil steckenden Schenkel des Montageteils geschraubt werden.

Vor dem Hintergrund des voranstehend erläuterten Standes der Technik bestand die Aufgabe der Erfindung darin, einen Aufbau für ein Nutzfahrzeug zu schaffen, der sich einerseits mit einfachen Mitteln montieren lässt und bei dem andererseits optimale Gebrauchseigenschaften gewährleistet sind.

Diese Aufgabe ist erfindungsgemäß durch den in Anspruch 1 angegebenen Aufbau gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Aufbau für ein Nutzfahrzeug weist in Übereinstimmung mit dem eingangs angegebenen Stand der Technik mindestens eine Seitenwandkomponente und einen Boden auf, der mit der Seitenwandkomponente fest verbunden ist. Erfindungsgemäß liegt nun die Seitenwandkomponente mit ihrer dem Innenraum des Aufbaus zugeordneten Seitenfläche seitlich an einer ihr zugeordneten Anlagefläche eines Seitenprofils des Bodens an. Dabei sind die Seitenwandkomponente und der Boden ebenso erfindungsgemäß mit Hilfe mindestens eines Befestigungselements, das von der dem Boden zugeordneten Seite her durch das jeweilige Seitenprofil geführt ist und in die Seitenwandkomponente greift, fest miteinander verbunden.

Bei einem erfindungsgemäßen Aufbau liegt die mit dem Bodenelement zu verbindende Seitenwandkomponente folglich seitlich an einem Profil des Bodens an. Dabei ist es an dem Profil durch ein Befestigungselement gehalten, das die Seitenwandkomponente gegen das Profil des Bodens zieht und so einerseits die lagerichtige Positionierung an dem Profil des Bodens dauerhaft gewährleistet und andererseits das Gewicht der Seitenwandkomponente aufnimmt.

Das Befestigungselement ist bei dem erfindungsgemäßen Aufbau so angeordnet, dass es gegenüber einem in der Umgebung des Aufbaus stehenden Betrachter durch die Seitenwandkomponente selbst abgeschirmt ist. Auf diese Weise wird nicht nur eine optimal unkomplizierte und mit konventionellen Werkzeugen herzustellende Befestigung der Seitenwandkomponente an dem Boden ermöglicht, sondern auch auf besonders einfache Weise eine ebenso optimale äußere Erscheinung des erfindungsgemäßen Aufbaus erreicht.

Bei einem erfindungsgemäßen Aufbau handelt es sich typischerweise um einen so genannten Kofferaufbau, der quaderförmig ausgebildet ist und zwei sich über die Länge des Aufbaus erstreckende Längsseitenwandkomponenten, eine Dachkomponente, eine Bodenkomponente, eine Stirnwandkomponente und eine Rückwand aufweist, in der in der Regel die Zugangstür zum Innenraum des Kofferaufbaus vorgesehen ist. Die Seitenwand- und die Dachkomponenten sind dabei so fest ausgebildet, dass sie das im Innenraum des Aufbaus positionierte Gut gegen Einflüsse von außen sicher schützen.

Grundsätzlich können die einander zugeordneten Anlageflächen vom Seitenprofil des Bodens und von der Seitenwandkomponente beliebig geformt sein, solange eine einwandfreie und lagegenaue Anlage der Seitenwandkomponente an dem Seitenprofil gewährleistet ist. Besonders einfach lässt sich der gewünscht präzise Sitz der Seitenwandkomponente an dem Boden dadurch gewährleisten, dass die Anlagefläche des Seitenprofils und die an der Anlagefläche des Seitenprofils anliegende Anlagefläche der Seitenwandkomponente eben ausgebildet sind. Insbesondere bei einem kofferförmigen Aufbau sind die Anlageflächen der Seitenwandkomponente und des Seitenprofils bevorzugt vertikal ausgerichtet, um die der Quaderform des Kastenaufbaus entsprechende Ausrichtung der Seitenwandkomponente auf einfache Weise zu unterstützen.

Zur Erhöhung der Festigkeit der Seitenwandkomponente im Bereich der Anlagefläche, mit der die Seitenwandkomponente am zugeordneten Seitenprofil des Bodens anliegt, kann es zweckmäßig sein, wenn an der dem Innenraum des Aufbaus zugeordneten Seitenfläche der Seitenwandkomponente eine Sockelscheuerleiste befestigt ist, deren dem Innenraum zugeordnete Außenfläche die Anlagefläche bildet, mit der die Seitenwandkomponente an dem Seitenprofil des Bodens anliegt. Die in diesem Fall bis in die Fügezone zwischen der Seitenwandkomponente und dem Seitenprofil verlängerte Sockelscheuerleiste verstärkt die Seitenwandkomponente, so dass die über das Befestigungselement aufgebrachten Kräfte von der Seitenwandkomponente besonders sicher aufgenommen werden können.

Diese aussteifende Wirkung der Sockelscheuerleiste kann bei einem erfindungsgemäßen Aufbau zusätzlich dadurch unterstützt werden, dass die Sockelscheuerleiste um die dem Boden zugeordnete untere Kante der Seitenwandkomponente gekantet ist.

Besonders geeignet ist der bei einem erfindungsgemäßen Aufbau vorgesehene Anschluss zwischen dem Boden und der Seitenwandkomponente für solche Aufbauten, bei denen die Seitenwandkomponente aus mindestens zwei einzeln vorgefertigten Modulen zusammengesetzt ist, von denen jedes an dem Seitenprofil des Bodens anliegt. Um in diesem Fall eine für die Aufnahme der vom Befestigungselement aufgebrachten Kräfte ausreichende Festigkeit zu gewährleisten, kann jedes Modul als Aussteifung einen umlaufenden Profilrahmen aufweisen.

Um die auf das Seitenprofil des Bodens wirkenden Kräfte möglichst gering zu halten, kann es vorteilhaft sein, wenn die Verbindung zwischen der Seitenwandkomponente und dem Boden jeweils an einer Position erfolgt, an der ein Querträger des Bodens gegen das jeweilige Seitenprofil des Bodens abgestützt ist. Dies erlaubt es, das Befestigungselement so zu positionieren, dass auch der Querträger einen Teil der vom Befestigungselement aufgebrachten Kräfte übernimmt.

Die Ausrichtung der Seitenwandkomponente an dem Seitenprofil des Bodens kann dadurch erleichtert werden, dass an den Boden ein in Richtung der Unterseite des Aufbaus und nach Außen abstehender Positionierabschnitt angeformt ist, auf dem die Seitenwandkomponente abgestützt ist.

Wenn gleichzeitig die Befestigungselemente so positioniert sind, dass sie in einen Eckbereich eines Aussteifungsprofils des jeweiligen Moduls greifen, sind auch die Belastungen der Seitenwandkomponente minimiert.

Die optische Erscheinung des erfindungsgemäßen Aufbaus kann dadurch weiter verbessert werden, dass die Seitenwandkomponente mit ihrem unteren, dem Boden zugeordneten Randabschnitt in Richtung der Unterseite des Aufbaus über den Boden hinaus steht. Der über die Unterseite des Bodens hinaus stehende Abschnitt der Seitenwandkomponente verhindert in diesem Fall den freien Blick auf die Unterseite des Bodens. Gleichzeitig kann der über die Unterseite des Bodens frei hinaus stehende äußere Kantenbereich der Seitenwandkomponente mit einem aus einem elastischen Material bestehenden Profil abgedeckt sein. Dieses Profil kann zusätzlich zum Halten von weiteren Bauelementen, wie beispielsweise Kabel zur elektrischen Versorgung, genutzt werden. Dabei ergibt sich eine besonders einfache Befestigung dann, wenn das Profil auf die äußere freie Kante der Seitenwand-Komponente aufgesteckt ist.

Zur Ladefläche des Bodens hin kann der Spalt zwischen Boden und Seitenwand-Komponente durch eine Gummidichtung abgedichtet sein. Der Boden kann ebenfalls aus einzelnen Bodenmodulen zusammengesetzt sein. Das Seitenprofil ist dann aus vielen einzelnen Abschnitten zusammengesetzt, von denen jeweils einer einem der Bodenmodule angehört.

Nachfolgend wird die Erfindung anhand von Ausführungsbeispielen näher erläutert. Es zeigen:
- Fig. 1: ein Nutzfahrzeug mit einem Kofferaufbau in perspektivischer Ansicht;

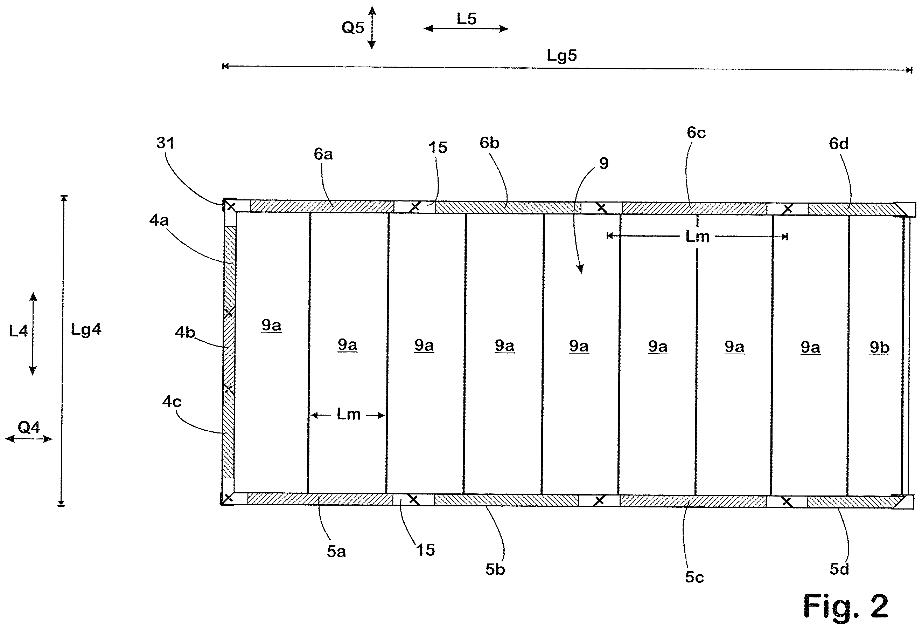

- Fig. 2: den Kofferaufbau des in Fig. 1 dargestellten Nutzfahrzeugs in einem Horizontalschnitt;

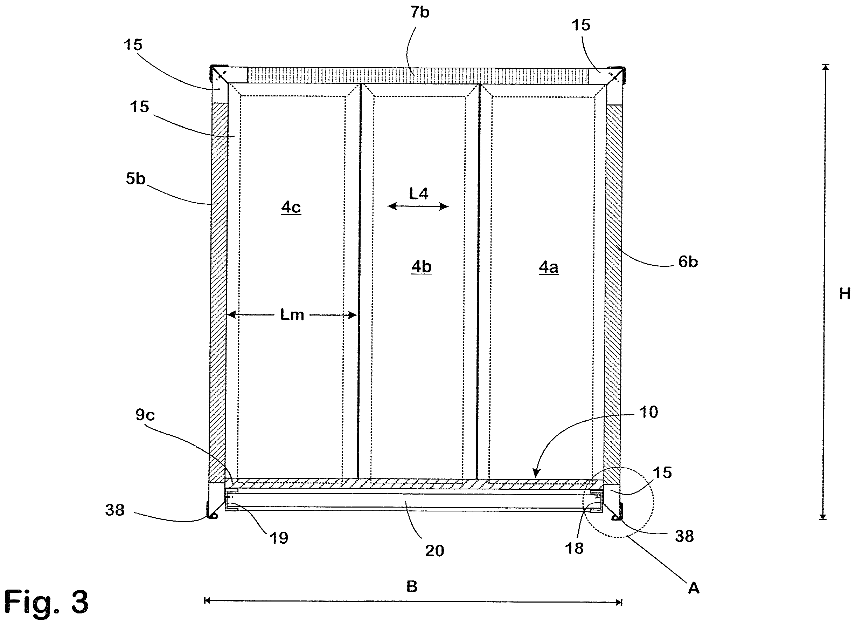

- Fig. 3: den Kofferaufbau in einem Vertikalschnitt quer zur Längsachse des Nutzfahrzeugs;

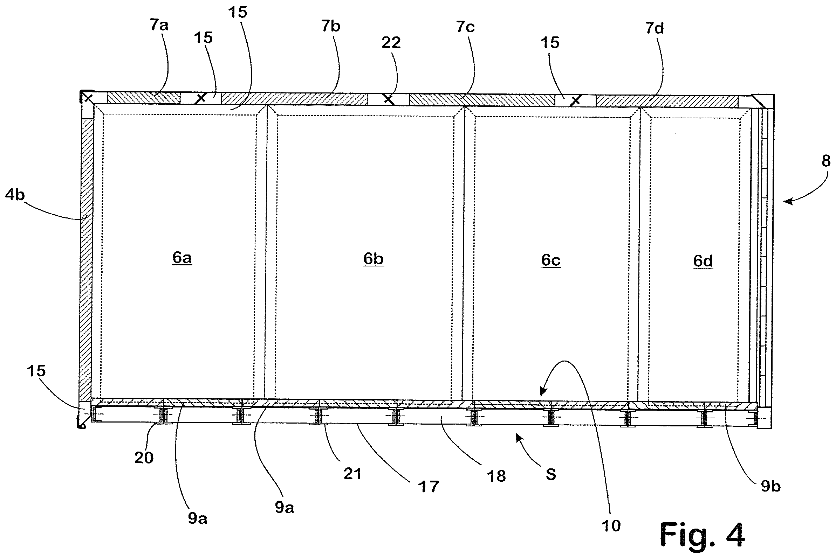

- Fig. 4: den Kofferaufbau in einem Vertikalschnitt längs der Längsachse des Nutzfahrzeugs;
- Fig. 5: einen Ausschnitt A von Fig. 3 in einer vergrößerten Ansicht.

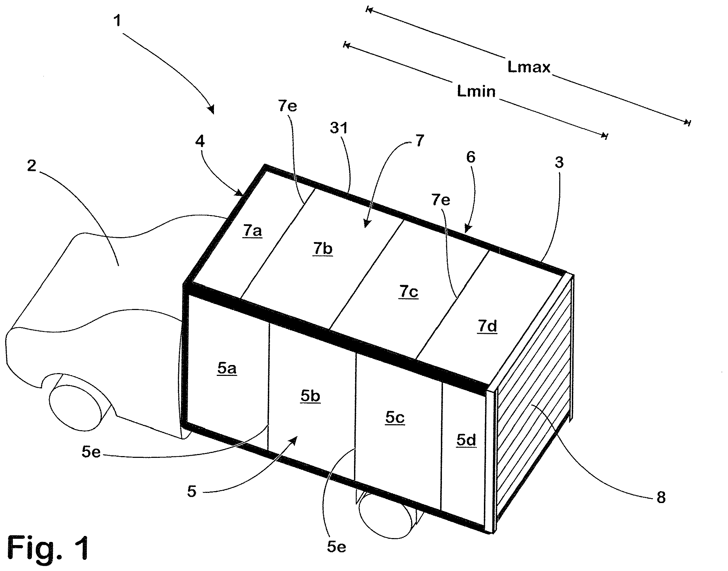

Bei dem in Fig. 1 dargestellten Nutzfahrzeug 1 handelt es sich beispielsweise um einen konventionellen Transporter, auf dessen hier nicht näher dargestellten Chassis frontseitig das den Antriebsmotor und die Kabine aufnehmende Fahrerhaus 2 und daran anschließend ein als Kofferaufbau ausgebildeter Aufbau 3 montiert ist. Der Aufbau 3 ist auf den hier ebenfalls nicht gezeigten Längsträgern des Chassis des Nutzfahrzeugs 1 abgestützt.

Der Aufbau 3 weist eine Kastenform auf und ist aus den Komponenten "Stirnseite 4", "Längsseitenwände 5,6", "Dach 7" und "Rückwand 8" zusammengesetzt. Zusätzlich umfasst der Aufbau 3 eine Boden-Komponente 9, die über Querträger 25,26 auf den nicht gezeigten Längsträgern des Chassis montiert ist und dessen Oberseite eine Ladefläche 10 für das jeweils zu transportierende Gut bildet.

Die Komponenten 4,5,6 und 7 des Aufbaus 3 sind jeweils aus gleichartig aufgebauten Modulen 4a - 4c, 5a - 5d, 6a - 6d und 7a - 7d zusammengesetzt. Jedes der Module 4a - 7d weist nach Art eines Paneels ebene, rechteckig geformte Seitenflächen 11,12 auf, von denen jeweils eine dem von dem Aufbau 3 umschlossenen Innenraum 13 und eine der Umgebung 14 des Aufbaus 3 zugeordnet ist.

Die die Stirnseiten-Komponente 4 und die Seitenwand-Komponenten 5,6 bildenden Module 4a - 6d erstrecken sich jeweils über die Höhe H des Aufbaus 3, während ihre in Längsrichtung L4, L5 der jeweiligen Komponente 4 - 7 gemessene Länge Lm jeweils einem Bruchteil der Gesamtlänge Lg4, Lg5 der betreffenden Komponente 4 - 6 entspricht. Die Länge Lg4 der Stirnwand-Komponente 4 entspricht dabei der Breite B des Aufbaus 3.

Die Module 7a - 7d der Dach-Komponente 7 erstrecken sich dagegen zwischen den Seitenwand-Komponenten 5,6 über die Breite B des Aufbaus 3. Ihre ebenfalls in Längsrichtung L5 der Komponenten 5,6 gemessene jeweilige Länge Lm entspricht dabei ebenfalls einem Bruchteil der Länge Lg5.

Die Module 5a - 6d der Seitenwand-Komponenten 5,6 und die Module 7a - 7d der Dach-Komponente 7 sind unter Berücksichtigung ihrer jeweiligen Länge Lm so angeordnet, dass die Stoßlinien 5e,6e,7e, an denen die Module 5a - 7d der jeweiligen Komponente 5 - 7 aneinander stoßen, jeweils versetzt zu den Stoßlinien 5e,6e,7e der angrenzenden Komponente 5 - 7 ausgerichtet sind.

Dazu sind die Seitenwand-Komponenten 5,6 beginnend mit ihrer dem Fahrerhaus 2 zugeordneten Kante jeweils aus drei gleichlangen und gleichhohen Modulen 5a - 5c, 6a - 6c sowie einem weiteren Modul 5d,6d zusammengesetzt. Die Länge Lm dieses Moduls 5d,6d ist kürzer als die Länge Lm der anderen Module 5a - 6c, um die Gesamtlänge Lg5 der durch die Module 5a - 6d gebildeten Komponenten 5,6 so anzupassen, dass sie größer ist als die für den Aufbau 3 minimal zur Verfügung stehende Länge Lmin der nicht gezeigten Längsträger des Fahrzeugchassis und kürzer als die unter Berücksichtigung der vom Fahrerhaus 2 nach den gesetzlichen Vorschriften noch zur Verfügung stehenden maximal zulässigen Länge Lmax des Aufbaus 3.

Demgegenüber ist bei der Dach-Komponente 7 angrenzend an die Stirnseite 4 des Aufbaus 3 das Modul 7a angeordnet, dessen Länge Lm gleich der Länge Lm der Module 5d, 6d und damit kürzer ist als die Länge Lm der an die Stirnseite 4 angrenzenden Module 5a,6a der Seitenwand-Komponenten 5,6. An das Modul 7a schließen sich drei Module 7b - 7d an, deren Länge Lm gleich der Länge Lm der Module 5a - 5c bzw. 6a - 6c ist. Im Ergebnis ist auf diese Weise bei versetzt zueinander angeordneten Stoßlinien 5e,6e und 7e der Seitenwand- und der Dach-Komponenten 5,6,7 die Gesamtlänge der Dach-Komponente 7 gleich der Gesamtlänge Lg5 der Seitenwand-Komponenten 5,6. Durch Variation der Längen Lm der verschiedenen Module 5a - 7d kann so die jeweilige Gesamtlänge Lg5 des Aufbaus 3 an das durch die Chassis-Länge Lmin und die maximal zulässige Länge Lmax begrenzte Längenfenster angepasst werden.

Demselben Prinzip folgend weisen das Modul 4b eine geringere Länge Lm auf als die beiden anderen Module 4a,4c der Stirnwand-Komponente 4, um die Gesamtlänge Lg4 der Stirnwand-Komponente 4 an die jeweils zulässige Breite B des Aufbaus 3 anzupassen.

Die Abmessungen H und Lm der Module 4a - 7d folgen einem Raster, dessen Schrittweiten beispielsweise so aufeinander abgestimmt sind, dass unter Berücksichtigung der Abmessungen heute zur Verfügung stehender Fahrzeug-Chassis durch eine Kombination von jeweils maximal vier unterschiedlichen Modultypen sämtliche derzeit geforderten Abmessungen von Aufbauten abgedeckt werden können.

Ihre Formsteifigkeit erhalten die Module 4a - 4d durch jeweils einen in ihrem Randbereich umlaufenden Rahmen 15, der beispielsweise aus vorgefertigten, rechtwinklig zueinander ausgerichteten Metallprofilen zusammengesetzt ist. Das die Seitenflächen 11,12 bildende Material der Module 4a - 7c liegt dabei jeweils an den den Seitenflächen 11,12 zugeordneten Seiten des Rahmens 15 an, so dass die Rahmen 15 der Module 4a - 7d für den Betrachter des Aufbaus 3 weitestgehend unsichtbar sind. Der von dem Rahmen 15 und der die Seitenflächen 11,12 bildenden Materiallage umschlossene Raum ist mit einer wärmeisolierenden Schaumfüllung 16 ausgeschäumt.

Dem voranstehend für die Module 4a - 7d und die Komponenten 4 - 7 geschilderten Konzept folgend ist auch die Boden-Komponente 9 aus mehreren einzeln vorgefertigten Modulen 9a,9b zusammengesetzt. Die Module 9a,9b erstrecken sich jeweils parallel zu den Stirn- und Rückwand-Komponenten 4,8 über die Breite B des Aufbaus 3 und weisen bis auf eines alle die gleiche in Längsrichtung L5 gemessene Länge Lm auf. Lediglich das an die Rückwand 8 des Aufbaus 3 angrenzende Modul 9b der Boden-Komponente 9 weist eine kürzere Länge Lm auf, um die Gesamtlänge des Bodens 9 an die Länge Lg5 der Seitenwand-Komponenten 5,6 anzupassen.

Jedes der Module 9a,9b der Boden-Komponente 9 weist eine rechteckige Bodenplatte 9c auf, die von einem Rahmen 17 getragen ist. Der Rahmen 17 ist jeweils aus zwei Seitenprofilabschnitten 18,19, von denen jeweils eines an der der Seitenwand-Komponente 5 bzw. 6 zugeordneten Längsseite der Bodenplatte 9c angeordnet ist, und zwei Querträgern 20,21 gebildet, die sich über die Breite des Aufbaus 3 zwischen den Seitenwand-Komponenten 5,6 erstrecken.

Bei den Querträgern 20,21 handelt es sich um im Querschnitt U-förmige Stahlprofile, auf deren einem Schenkel die Bodenplatte 9c liegt. Gleichzeitig ist die Basis der Querträger 20,21 senkrecht zur Bodenplatte 9c ausgerichtet, so dass an der Außenseite der Querträger 20,21 jeweils eine Anlagefläche gebildet ist, an der der Querträger 21,20 des jeweils benachbarten Moduls 9a,9b direkt anliegt. Über Verschraubungen 22 sind die aneinander anliegenden Module 9a,9b der Boden-Komponente 9 fest miteinander verbunden. Die jeweils einer der Längsseiten des Aufbaus 3 zugeordneten Seitenprofilabschnitte 18,19 bilden gemeinsam jeweils ein Seitenprofil S, an dem die der jeweiligen Längsseite des Aufbaus 3 zugeordnete Längsseitenwand-Komponente 5,6 seitlich an der Boden-Komponente 9 anliegt.

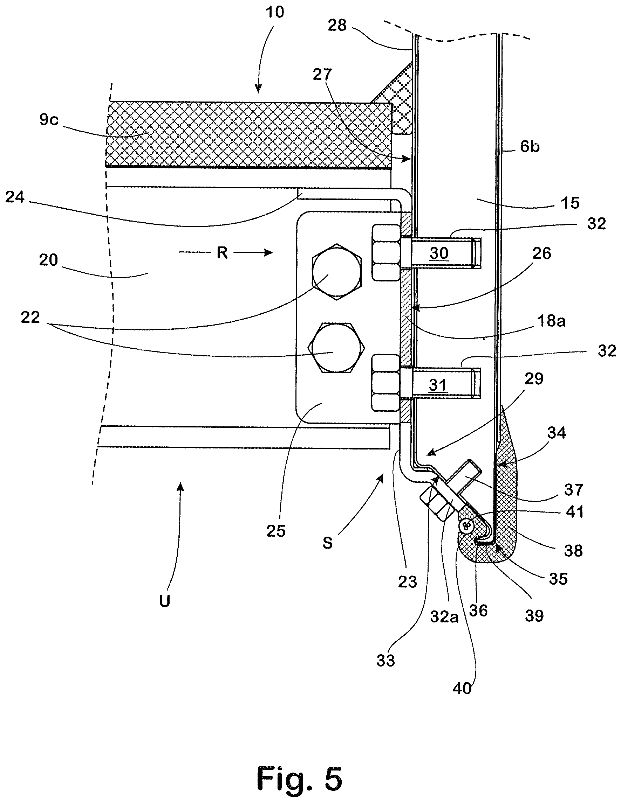

Als Beispiel für den erfindungsgemäßen Anschluss der Längsseitenwandkomponenten 5,6 an die Boden-Komponente 9 ist im Einzelnen in Fig. 5 die Verbindung zwischen der Längsseitenwandkomponente 6 und der Boden-Komponente 9 dargestellt.

Die Seitenprofilabschnitte 18,19 weisen jeweils einen senkrecht zur Bodenplatte 9c ausgerichteten Stegabschnitt 18a und einen rechtwinklig dazu abgekanteten Tragabschnitt 24 auf, auf dem die Bodenplatte 9c mit ihrem der jeweiligen Längsseitenwand-Komponente 5,6 zugeordneten Randbereich liegt.

Zusätzlich weisen die Seitenprofilabschnitte 18,19 an ihren den Querträgern 20,21 zugeordneten Enden jeweils eine Lasche 25 auf, mit denen sie vertikal an der Basis des jeweiligen Querträgers 20,21 anliegen. In die Laschen 25 und die Querträger 20,21 sind zueinander korrespondierende Durchgangsöffnungen eingeformt, durch die die die Verschraubungen 22 bildenden Schrauben geführt sind.

An der Außenseite des Stegabschnitts 18a der Seitenprofilabschnitte 18,19 ist jeweils eine ebene, senkrecht in Bezug auf die Ladefläche 10 ausgerichtete Anlagefläche 26 ausgebildet.

An der Anlagefläche 26 liegt das jeweilige Seitenwandmodul 6b mit der eine ebene, ebenfalls senkrecht in Bezug auf die Ladefläche 10 ausgerichtete Anlagefläche 27 für das jeweilige Seitenwandmodul 6b bildenden Außenfläche einer Sockelscheuerleiste 28 seitlich an.

Die Sockelscheuerleiste 28 ist auf die dem Innenraum 13 des Aufbaus 3 zugeordnete Außenlage des jeweiligen Seitenwandmoduls 6b aufgeklebt und bedeckt einen bodennahen Randstreifen des Seitenwandmoduls 6b, gegen den im praktischen Einsatz immer wieder hier nicht dargestellte, in dem Aufbau 3 zu transportierende Paletten oder die Reifen der zum Beladen des Aufbaus 3 verwendeten, hier ebenfalls nicht dargestellten Gabelstapler stoßen. Dabei erstreckt sich die Sockelscheuerleiste 28 in Richtung der Unterseite U der Bodenkomponente 9 über die Bodenkomponente 9 hinaus und ist um die innere untere Kante 29 des Seitenwandmoduls 6b umgekantet. Auf diese Weise bildet die Sockelscheuerleiste 28 nicht nur im Bereich des Innenraums 13 des Aufbaus 3 einen Schutz gegen Beschädigung durch Stöße, sondern auch eine Verstärkung des jeweiligen Seitenwandmoduls 6b in dem Bereich des Anschlusses zur Bodenkomponente 9. Gleichzeitig kann die Sockelscheuerleiste 28 dazu genutzt werden, den Übergang zwischen den aneinander stoßenden Seitenwandmodulen 6a,6b,... zu überbrücken.

Die Befestigung des jeweiligen Seitenwandmoduls 6a,6b,... an dem jeweils zugeordneten Seitenprofilabschnitt 18 erfolgt durch als Befestigungselemente dienende Schrauben 30,31, die aus Richtung R von der Bodenkomponente 9 her durch in den jeweiligen Seitenprofilabschnitt 18 eingeformte Durchgangsöffnungen geschoben und in korrespondierende Schrauböffnungen 32 des jeweiligen Seitenwandmoduls 6a,6b,... geschraubt werden. Bevorzugt werden dabei die Schrauböffnungen 32 im Bereich des Rahmens 15 des jeweiligen Seitenwandmoduls 6a,6b,... angeordnet, so dass keine besonderen zusätzlichen Maßnahmen zur Verstärkung des Seitenwandmoduls 6a,6b,... im Bereich der so gebildeten Verschraubung vorgenommen werden müssen. Die Schrauben 30,31 ziehen das jeweilige Seitenwandmodul 6a,6b,... gegen den zugeordneten Seitenprofilabschnitt 18 und nehmen den wesentlichen Teil des Gewichts des Seitenwandmoduls 6a,6b,... auf.

Um die Montage der aus den Seitenwandmodulen 6a,6b,... gebildeten Seitenwand-Komponente 6 zu erleichtern, können an den Stegabschnitt 18a der Seitenprofilabschnitte 18,19 in regelmäßigen Abständen angeordnete, nach unten und außen schräg vom Stegabschnitt 18a abstehende Positionierabschnitte 32a angeformt sein, auf denen das jeweilige Seitenwandmodul 6a,6b,... mit seiner unteren Randfläche 33 steht.

Die ebene untere Randfläche 33 ist dabei ausgehend von der inneren unteren Kante 29 des jeweiligen Seitenwandmoduls 6a,6b,... so schräg nach unten und außen verlaufend ausgerichtet, dass die Randfläche 33 mit der eben ausgebildeten und in Bezug auf die Ladefläche 10 senkrecht ausgerichtete Außenfläche 34 des jeweiligen Seitenwandmoduls 6a,6b,... einen spitzen Winkel einschließt. Dabei ist der äußere untere Eckbereich 35 des jeweiligen Seitenwandmoduls 6a,6b,... durch eine sickenförmige, im Wesentlichen rechtwinklig zur Außenfläche 34 und in Richtung der Sockelscheuerleiste 28 gerichtete Umfalzung 36 ausgesteift.

Durch eine Verschraubung 37 ist der jeweilige Positionierabschnitt 32a fest mit dem zugeordneten Randabschnitt des jeweiligen Seitenwandmoduls 6a,6b,... verbunden.

Auf den äußeren unteren Eckbereich 35 des jeweiligen Seitenwandmoduls 6a,6b,... ist ein Gummiprofil 38 aufgesteckt, dass sich über die gesamte Länge Lg5 der jeweiligen Seitenwandkomponente 5,6 erstreckt. In das Gummiprofil 38 ist dabei eine Nut 39 eingeformt, deren Abmessungen und Form so bemessen sind, dass das Gummiprofil 38 form- und kraftschlüssig an der in die Nut 39 greifenden Umfalzung 36 des Eckbereichs 35 gehalten ist. Zusätzlich kann das Gummiprofil 38 mit seinem an der Außenfläche 34 anliegenden Schenkel fest mit der jeweiligen Seitenwandkomponente 5,6 verklebt sein.

Auf der dem Bodenelement 9 zugewanden Seite kann in das Gummiprofil eine sich über die Länge Lg5 erstreckende, ebenfalls nutförmige Aufnahme 40 eingeformt sein. In dieser Aufnahme 40 können elektrische Leitungen 41 gehalten sein, die zur Signalübertragung oder zur elektrischen Versorgung von elektrischen Verbrauchern des Aufbaus 3 oder des Nutzfahrzeugs genutzt werden können, auf denen der Aufbau 3 montiert ist.

### BEZUGSZEICHEN

- 1: Nutzfahrzeug
- 2: Fahrerhaus
- 3: Aufbau
- 4: Stirnseitenwand-Komponente des Aufbaus 3
- 4a-7d: Module
- 5,6: Längsseitenwand-Komponenten des Aufbaus 3
- 5e,6e,7e: Stoßlinien, an denen die Module 5a - 7d der jeweiligen Komponente 5 - 7 aneinander stoßen
- 7: Dach-Komponente des Aufbaus 3
- 8: Rückwand-Komponente des Aufbaus 3
- 9: Boden
- 9a,9b: Module der Boden-Komponente 9
- 9c: Bodenplatte der Module 9a,9b
- 10: Ladefläche des Aufbaus 3
- 11,12: Seitenflächen der Module 4a-7d
- 13: Innenraum des Aufbaus 3
- 14: Umgebung des Aufbaus 3
- 15: Rahmen
- 16: Schaumfüllung 16 ausgeschäumt.
- 17: Rahmen
- 18,19: Seitenprofilabschnitte
- 18a: Stegabschnitt
- 20,21: Querträger
- 22: Verschraubung
- 23: Rahmen der Module 9a,9b
- 24: Tragabschnitt
- 25: Lasche
- 26: Anlagefläche des Seitenprofils S
- 27: Anlagefläche der Längsseitenwandkomponente 5,6
- 28: Sockelscheuerleiste
- U: Unterseite der Bodenkomponente 9
- 29: untere Kante des Seitenwandmoduls 6b
- 30,31: Schrauben
- 32: Schrauböffnungen
- 32a: Positionierabschnitt
- 33: Randfläche
- 34: Außenfläche des jeweiligen Seitenwandmoduls 6a,6b,...
- 35: unterer Eckbereich
- 36: Umfalzung
- 37: Verschraubung
- 38: Gummiprofil
- 39: Nut
- 40: Aufnahme
- 41: elektrische Leitungen
- B: Breite des Aufbaus 3
- H: Höhe des Aufbaus 3
- L4,L5: Längsrichtung der jeweiligen Komponente 4 - 7
- Lm: jeweilige Länge der Module 4a - 7d und 9a,9b
- Lg4,Lg5: jeweilige Gesamtlänge der Komponenten 4 - 6
- Lmax: maximal für den Aufbau 3 zur Verfügung stehende Länge
- Lmin: minimal für den Aufbau 3 zur Verfügung stehende Länge
- S: Seitenprofil

## Patentansprüche

1. Aufbau, insbesondere Kofferaufbau, für ein Nutzfahrzeug, mit mindestens einer Seitenwandkomponente (5,6) und einem Boden (9), der mit der Seitenwandkomponente (5,6) fest verbunden ist, **dadurch gekennzeichnet, dass** die Seitenwandkomponente (5,6) mit ihrer dem Innenraum (13) des Aufbaus (3) zugeordneten Seitenfläche (27) seitlich an einer ihr zugeordneten Anlagefläche (26) eines Seitenprofils (S) des Bodens (9) anliegt und **dass** die Seitenwandkomponente (5,6) und der Boden (9) mit Hilfe mindestens eines Befestigungselements (30,31), das von der dem Boden (9) zugeordneten Seite her durch das Seitenprofil (S) geführt ist und in die jeweilige Seitenwandkomponente (5,6) greift, fest miteinander verbunden sind, so dass das Befestigungselement (30,31) gegenüber einem in der Umgebung des Aufbaus (3) stehenden Betrachter durch die Seitenwandkomponente (5,6) selbst abgeschirmt ist.

2. Aufbau nach Anspruch 1, **dadurch gekennzeichnet, dass** die Anlagefläche (26) des Seitenprofils (S) und die an der Anlagefläche (26) des Seitenprofils (S) anliegende Anlagefläche (27) der Seitenwandkomponente (5,6) eben ausgebildet sind.

3. Aufbau nach einem der voranstehenden Ansprüche, **dadurch gekennzeichnet, dass** an der dem Innenraum (13) des Aufbaus (3) zugeordneten Seitenfläche der Seitenwandkomponente (5,6) eine Sockelscheuerleiste (28) befestigt ist, deren dem Innenraum (13) zugeordnete Außenfläche die Anlagefläche (27) der Seitenwandkomponente (5,6) bildet, mit der die Seitenwandkomponente (5,6) an dem Seitenprofil (S) des Bodens (9) anliegt.

4. Aufbau nach Anspruch 3, **dadurch gekennzeichnet, dass** die Sockelscheuerleiste (28) um die dem Boden (9) zugeordnete untere Kante (29) der Seitenwandkomponente (5,6) gekantet ist.

5. Aufbau nach einem der voranstehenden Ansprüche, **dadurch gekennzeichnet, dass** die Seitenwandkomponente (5,6) aus mindestens zwei Modulen (4a - 6) zusammengesetzt ist, von denen jedes an dem Seitenprofil (S) des Bodens (9) anliegt.

6. Aufbau nach Anspruch 4, **dadurch gekennzeichnet, dass** jedes Modul (4a - 6) zur Aussteifung einen umlaufenden Profilrahmen (23) aufweist.

7. Aufbau nach einem der voranstehenden Ansprüche, **dadurch gekennzeichnet, dass** die Verbindung zwischen der Seitenwandkomponente (5,6) und dem Boden (9) jeweils an einer Position erfolgt, an der ein Querträger (20,21) des Bodens (9) gegen das jeweilige Seitenprofil (S) des Bodens (9) abgestützt ist.

8. Aufbau nach einem der voranstehenden Ansprüche, **dadurch gekennzeichnet, dass** die Seitenwandkomponente (5,6) mit ihrem unteren, dem Boden (9) zugeordneten Randabschnitt in Richtung der Unterseite (U) des Aufbaus (3) über den Boden (9) hinaus steht.

9. Aufbau nach einem der voranstehenden Ansprüche, **dadurch gekennzeichnet, dass** die Seitenwandkomponente (5,6) an ihrem unteren Randabschnitt eine Randfläche (33) aufweist, die gegenüber der Außenfläche (34) der Seitenwandkomponente (5,6) unter einem von 90° abweichenden Winkel geneigt ist, so dass die Außenfläche (34) und die Randfläche (33) einen spitzen Winkel einschließen.

10. Aufbau nach einem der voranstehenden Ansprüche, **dadurch gekennzeichnet, dass** an den Boden (9) ein in Richtung der Unterseite (U) des Aufbaus (3) und nach Außen abstehender Positionierabschnitt (32a) angeformt ist, auf dem die Seitenwandkomponente (5,6) abgestützt ist.

11. Aufbau nach einem der voranstehenden Ansprüche, **dadurch gekennzeichnet, dass** die der Unterseite (U) des Bodens (9) zugeordnete freie äußere Kante (35) der Seitenwandkomponente (5,6) durch ein aus einem elastischen Material bestehendes Profil (38) abgedeckt ist.

12. Aufbau nach Anspruch 11, **dadurch gekennzeichnet, dass** an dem Profil (38) zusätzliche Bauelemente (41) gehalten sind.

## Claims

1. Body, in particular a box body, for a commercial vehicle, comprising at least one side wall component (5, 6) and a base (9) which is rigidly connected to the side wall component (5, 6), **characterised in that** the lateral face (27) of the side wall component (5, 6), which face is assigned to the interior (13) of the body (3), bears laterally against a contact surface (26) which is assigned thereto of a side profile (A) of the base (9), and **in that** the side wall component (5, 6) and the base (9) are rigidly interconnected by means of at least one fastener (30, 31), which is guided from the side assigned to the base (9) through the side profile (S) and engages in each side wall component (5, 6), in such a way that the fastener (30, 31) is shielded from an observer standing in the surroundings of the body (3) by the side wall component (5, 6) itself.

2. Body according to Claim 1, **characterised in that** the contact surface (26) of the side profile (S) and the contact surface (27) of the side wall component (5, 6) bearing against the contact surface (26) of the side profile (S) have a planar design.

3. Body according to any one of the preceding claims, **characterised in that**, to the lateral face of the side wall component (5, 6) assigned to the interior (13) of the body (3), a base scuff rib (28) is fixed, of which the outer face assigned to the interior (13) forms the contact surface (27) of the side wall component (5, 6), with which surface the side wall component (5, 6) bears against the side profile (S) of the base (9).

4. Body according to Claim 3, **characterised in that** the base scuff rib (28) is bent around the lower edge (29), which is assigned to the base (9), of the side wall component (5, 6).

5. Body according to any one of the preceding claims, **characterised in that** the side wall component (5, 6) is composed of at least two modules (4a-6), each of which bears against the side profile (S) of the base (9).

6. Body according to Claim 4, **characterised in that** each module (4a-6) comprises a peripheral profile frame (23) for reinforcement.

7. Body according to any one of the preceding claims, **characterised in that** the connection between the side wall component (5, 6) and the base (9) takes place in each case in a position in which a cross-member (20, 21) of the base (9) is supported against the respective side profile (S) of the base (9).

8. Body according to any one of the preceding claims, **characterised in that** the lower edge portion, which is assigned to the base (9), of the side wall component (5, 6) protrudes towards the lower face (U) of the body (3) beyond the base (9).

9. Body according to any one of the preceding claims, **characterised in that** the side wall component (5, 6) comprises an edge face (33) on the lower edge portion thereof, which face is tilted with respect to the outer face (34) of the side wall component (5, 6) at an angle deviating from 90° so that the outer face (34) and the edge face (33) enclose an acute angle.

10. Body according to any one of the preceding claims, **characterised in that** a positioning portion (32a) protruding towards the lower face (U) of the body (3) and outwards is formed on the base (9), on which portion the side wall component (5, 6) is supported.

11. Body according to any one of the preceding claims, **characterised in that** the free outer edge (35), which is assigned to the lower face (U) of the base (9), of the side wall component (5, 6) is covered by a profile (38) consisting of a resilient material.

12. Body according to Claim 11, **characterised in that** additional assembly parts (41) are held on the profile (38).

## Revendications

1. Structure, en particulier une structure de coffre, pour un véhicule utilitaire, avec au moins un composant de paroi latérale (5, 6) et un sol (9) qui est fermement relié au composant de paroi latérale (5, 6), **caractérisée en ce que** le composant de paroi latérale (5, 6) avec sa surface latérale (27) associée à l'espace intérieur (13) de la structure (3) repose latéralement sur une surface d'appui (26) d'un profil latéral (S) du sol (9) lui étant associée et **en ce que** le composant de paroi latérale (5, 6) et le sol (9) sont fermement reliés l'un à l'autre à l'aide d'au moins un élément de fixation (30, 31) qui est conduit à partir du côté associé au sol (9) à travers le profil latéral (S) et s'engage dans le composant de paroi latérale (5, 6) respectif, de sorte que l'élément de fixation (30, 31) est lui-même protégé par le composant de paroi latérale (5, 6) par rapport à un observateur se tenant dans l'environnement de la structure (3).

2. Structure selon la revendication 1, **caractérisée en ce que** la surface d'appui (26) du profil latéral (S) et la surface d'appui (27) du composant de paroi latérale (5, 6) reposant contre la surface d'appui (26) du profil latéral (S) sont conçues planes.

3. Structure selon l'une des revendications précédentes, **caractérisée en ce qu'**une plinthe à socle (28), dont la surface extérieure associée à l'espace intérieur (13) forme la surface d'appui (27) du composant de paroi latérale (5, 6) avec lequel le composant de paroi latérale (5, 6) s'appuie sur le profil latéral (S) du sol (9), est fixée sur la surface latérale du composant de paroi latérale (5, 6) associée à l'espace intérieur (13) de la structure (3).

4. Structure selon la revendication 3, **caractérisée en ce que** la plinthe (28) est pliée au niveau du bord inférieur (29) du composant de paroi latérale (5, 6) associé au sol (9).

5. Structure selon l'une des revendications précédentes, **caractérisée en ce que** le composant de paroi latérale (5, 6) est composé d'au moins deux modules (4a - 6), dont chacun desquels repose sur le profil latéral (S) du sol (9).

6. Structure selon la revendication 4, **caractérisée en ce que** chaque module (4a - 6) présente un cadre profilé (23) périphérique pour le renforcement.

7. Structure selon l'une des revendications précédentes, **caractérisée en ce que** le raccordement entre le composant de la paroi latérale (5, 6) et le sol (9) a lieu respectivement au niveau d'une position, sur laquelle une traverse (20, 21) du sol (9) repose contre le profil latéral (S) respectif du sol (9).

8. Structure selon l'une des revendications précédentes, **caractérisée en ce que** le composant de paroi latérale (5, 6) avec sa section de bord inférieur associée au sol (9) dépasse au-delà du sol (9) en direction du côté inférieur (U) de la structure (3).

9. Structure selon l'une des revendications précédentes, **caractérisée en ce que** le composant de paroi latérale (5, 6) présente une surface de bord (33) au niveau de sa section de bord inférieur qui est inclinée par rapport à la surface extérieure (34) du composant de paroi latérale (5, 6) suivant un angle s'écartant de 90°, de sorte que la surface extérieure (34) et la surface de bord (33) forment un angle aigu.

10. Structure selon l'une des revendications précédentes, **caractérisée en ce qu'**une partie de positionnement (32a) dépassant vers l'extérieur et en direction du côté inférieur (U) de la structure (3) sur laquelle repose le composant de paroi latérale (5, 6), est formée sur le sol (9).

11. Structure selon l'une des revendications précédentes, **caractérisée en ce que** le bord libre extérieur (35) du composant de paroi latérale (5, 6) associé au côté inférieur (U) du sol (9) est recouvert par un profil (38) se composant d'un matériau élastique.

12. Structure selon la revendication 11, **caractérisée en ce que** des éléments de construction (41) supplémentaires sont maintenus sur le profil (38).
